# EUROPEAN PATENT APPLICATION

(11) **EP 4 664 714 A1**
(43) Date of publication of application: **17.12.2025**
(21) Application number: 24769900.2
(22) Date of filing: 11.03.2024
(51) Int. Cl.: H02J 7/00, H02J 7/34, H01M 10/44

(54) **CHARGING METHOD, ELECTRONIC DEVICE, SYSTEM AND COMPUTER STORAGE MEDIUM**

(30) Priority: 16.03.2023 CN 202310302219
(71) Applicant: Huawei Technologies Co., Ltd., Shenzhen, Guangdong 518129 (CN)
(72) Inventor: LIU, Kechen, Shenzhen, Guangdong 518129 (CN); GUO, Xin, Shenzhen, Guangdong 518129 (CN); XI, Min, Shenzhen, Guangdong 518129 (CN); TIAN, Xin, Shenzhen, Guangdong 518129 (CN); XU, Meng, Shenzhen, Guangdong 518129 (CN)
(74) Representative: Pfenning, Meinig & Partner mbB
(86) International application number: PCT/CN2024/080917
(87) International publication number: WO 2024/188207

(57) **Abstract**

A charging method and system, an electronic device, and a computer storage medium are disclosed. The system includes a first device (100) and a second device (200). The first device includes a boost chip (730) and a first battery (740). The second device includes a charge pump chip (830) and a second battery (840). The first battery is configured to output a first voltage to the boost chip. The boost chip is configured to: receive the first voltage and output a second voltage to the second device, where the second voltage is greater than the first voltage. The charge pump chip is configured to: receive the second voltage and output a third voltage to the second battery, where the second voltage is M times the third voltage, and M is a positive number greater than 1. The second battery is configured to: receive the third voltage and perform charging.

## Description

This application claims priority to Chinese Patent Application No. 202310302219.6, filed with the China National Intellectual Property Administration on March 16, 2023, and entitled "CHARGING METHOD AND SYSTEM, ELECTRONIC DEVICE, AND COMPUTER STORAGE MEDIUM", which is incorporated herein by reference in its entirety.

### TECHNICAL FIELD

This application relates to the field of circuit technologies, and in particular, to a charging method and system, an electronic device, and a computer storage medium.

### BACKGROUND

In recent years, a capacity of mobile phone batteries has been continuously increased, and a speed of wired forward charging has been continuously increased, with a charging power of up to 200 watts (watts, W) currently available. However, a power of wired reverse charging has not been increased. At present, the industry mainly uses an on-the-go (on-the-go, OTG) technology to implement wired reverse charging. A specific implementation process may be as follows: A buck (buck) chip in a mobile phone 1 outputs a voltage of approximately 5 volts (volts, V) to a mobile phone 2 by using a reverse boost function, and then a buck chip in the mobile phone 2 performs buck and charging. A charging power is approximately 6 W, resulting in a very low speed of wired reverse charging.

### SUMMARY

This application discloses a charging method and system, an electronic device, and a computer storage medium, to increase a power of wired reverse charging, so as to increase a charging speed.

According to a first aspect, this application provides a charging system, including a first device and a second device. The first device includes a boost chip and a first battery. The second device includes a charge pump chip and a second battery. The first battery is configured to output a first voltage to the boost chip. The boost chip is configured to: receive the first voltage input by the first battery and output a second voltage to the second device, where the second voltage is greater than the first voltage. The charge pump chip is configured to: receive the second voltage input by the first device and output a third voltage to the second battery, where the second voltage is M times the third voltage, and M is a positive number greater than 1. The second battery is configured to: receive the third voltage input by the charge pump chip and perform charging.

The charge pump chip is configured to output a voltage whose numerical value is 1/M of an input voltage in a manner of M-times buck. In this case, a ratio of the input voltage to the output voltage of the charge pump chip is M:1. The charge pump chip may be further configured to output a voltage whose numerical value is M times of an input voltage in a manner of M-times boost. In this case, a ratio of the input voltage to the output voltage of the charge pump chip is 1:M. The boost chip is configured to output a voltage greater than an input voltage in a manner of continuous and linear adjustment. In other words, the output voltage of the boost chip is any value greater than the input voltage.

In the foregoing method, the first device serving as a charging device may boost a voltage provided by the first battery and output a voltage to the second device by using the boost chip, and the second device serving as a to-be-charged device may perform M-times buck on the voltage input by the first device and output a voltage to charge the second battery by using the charge pump chip. Both the boost chip and the charge pump chip can provide a high output voltage, to increase a power of wired reverse charging, so as to increase a charging speed. In addition, a voltage output by the boost chip of the charging device to the charge pump chip of the to-be-charged device may be continuously and linearly adjusted. Regardless of a voltage value required by the battery of the to-be-charged device, the boost chip can output M times of the voltage value to the charge pump chip, so that the charge pump chip inputs a voltage of the voltage value to the second battery for charging, instead of a manner in which the charging device outputs a voltage to the charge pump chip of the to-be-charged device by using a charge pump chip. This avoids a case in which normal charging cannot be performed (for example, abnormality is reported and charging is stopped) when a voltage output by the first battery and a voltage output by the second battery do not match the fixed ratio M, and can implement high-power and high-speed wired reverse charging in a general scenario.

In a possible implementation, the first device includes a first charging management chip, and the second device includes a second charging management chip. The second charging management chip is configured to send first request information to the first charging management chip according to a fast charging protocol, where the first request information is used to request a voltage of a first voltage value. The first charging management chip is configured to send first indication information to the boost chip, where the first indication information indicates the boost chip to output a voltage of the first voltage value. The boost chip is further configured to: receive the first voltage and output the second voltage of the first voltage value to the second device based on the first indication information.

In the foregoing method, the second device serving as a to-be-charged device may request the voltage of the specific first voltage value from the first device according to the fast charging protocol. The first device may indicate, based on the request, the boost chip to output the voltage of the first voltage value to the second device. In other words, the voltage provided by the charging device to the to-be-charged device is a real-time voltage required by the to-be-charged device according to the fast charging protocol. This ensures that the voltage output by the charging device meets a real-time charging requirement of the to-be-charged device, so that a charging process is more efficient and stable, a charging voltage in the entire charging process can be dynamically adjusted, and implementation is more flexible.

In a possible implementation, the first voltage value is determined by the charge pump chip based on a second voltage value and a ratio M corresponding to the charge pump chip, the second voltage value is a charging voltage value that is required by the second battery and that is obtained by the charge pump chip, and the first voltage value is M times the second voltage value.

In the foregoing method, the voltage value requested by the second device from the first device is determined based on the currently-obtained charging voltage value required by the second battery and the fixed ratio M corresponding to the charge pump chip. This can ensure that after the charge pump chip performs M-times buck on the voltage input by the first device to the second device, a voltage input to the second battery is the charging voltage currently required by the second battery, so that a charging process is more efficient and stable.

In a possible implementation, the second voltage value is an obtained charging voltage value required by the second battery of a first battery level. The second charging management chip is further configured to: after the second battery receives the third voltage input by the charge pump chip and performs charging, send second request information to the first charging management chip according to the fast charging protocol, where the second request information is used to request a voltage of a third voltage value, the third voltage value is determined by the charge pump chip based on a fourth voltage value and the ratio M corresponding to the charge pump chip, the fourth voltage value is a charging voltage value that is required by the second battery of a second battery level and that is obtained by the charge pump chip, and the third voltage value is M times the fourth voltage value. The first charging management chip is further configured to send second indication information to the boost chip, where the second indication information indicates the boost chip to output a voltage of the third voltage value. The boost chip is further configured to: receive the first voltage input by the first battery and output a fourth voltage of the third voltage value to the second device based on the second indication information. The charge pump chip is further configured to: receive the fourth voltage input by the first device and output a fifth voltage to the second battery, where the fourth voltage is M times the fifth voltage. The second battery is further configured to: receive the fifth voltage input by the charge pump chip and perform charging.

In the foregoing method, a numerical value of a required charging voltage varies with a battery level of the second battery. The second device may obtain, in real time, a charging voltage value required by the second battery, determine, based on the charging voltage value, a voltage value that needs to be input to the charge pump chip, and then request a voltage of the voltage value from the first device. In other words, the to-be-charged device may request a voltage of a required voltage value from the charging device according to a real-time charging requirement. This can ensure that after the charge pump chip performs M-times buck on a voltage input by the first device to the second device in real time, a voltage input to the second battery is a charging voltage currently required by the second battery, so that charging requirements of the second battery at different battery levels can be met, a charging process is more efficient and stable, a charging voltage in the entire charging process can be dynamically adjusted, and implementation is more flexible.

In a possible implementation, the second battery level is greater than the first battery level, the fourth voltage value is greater than the second voltage value, and the third voltage value is greater than the first voltage value.

In the foregoing method, as a charging process proceeds, a battery level of the second battery is increased, and a numerical value of a required charging voltage is also increased. The second device may re-obtain a charging voltage value required by the second battery at a current battery level, determine, based on the charging voltage value, a voltage value that needs to be input to the charge pump chip, and then request a voltage of the voltage value from the first device. In this way, a charging voltage input to the second battery is gradually increased. This further increases a charging speed of wired reverse charging, and improves user experience.

In a possible implementation, the fast charging protocol is a smart charging protocol SCP, a universal fast charging specification UFCS, or a quick charge QC protocol.

In the foregoing method, there are various fast charging protocols that can be used in this application, and application scenarios are wider.

In a possible implementation, the first device includes the first charging management chip, and the second device includes the second charging management chip. The first charging management chip is configured to: perform a handshake according to a power delivery PD protocol with the second charging management chip, and identify that the first device is a charging device and the second device is a to-be-charged device.

In a possible implementation, the first charging management chip is further configured to: when the first device receives a first user operation, identify that the first device is a charging device and the second device is a to-be-charged device, where the first user operation is used to set a connection mode of the first device and the second device to a reverse charging mode.

In the foregoing method, a to-be-charged device and a charging device may be determined based on a user operation, to ensure accuracy of a charging direction, so as to ensure that a charging process is performed normally.

In a possible implementation, the first device includes the first charging management chip, and the second device includes the second charging management chip. The boost chip is further configured to output the second voltage and a first current to the second device. The second charging management chip is configured to send third request information to the first charging management chip according to the fast charging protocol, where the third request information is used to request a current of a first current value, and the first current value is different from a numerical value of the first current. The first charging management chip is configured to send third indication information to the boost chip, where the third indication information indicates the boost chip to output a current of the first current value. The boost chip is further configured to: receive the voltage input by the first battery and output the second voltage and a second current of the first current value to the second device based on the third indication information.

For example, the first current value is greater than the numerical value of the first current.

In the foregoing method, when a voltage provided by the charging device to the to-be-charged device remains unchanged, the to-be-charged device may request a lower or higher current from the charging device, so that a real-time charging current requirement of the to-be-charged device can be met. In addition, requesting a higher current can increase a charging power, further increase a charging speed, and improve user experience. A charging current in an entire charging process can be dynamically adjusted, and implementation is more flexible.

In a possible implementation, the second device includes a display, and the display is configured to display a first interface, where the first interface includes fourth indication information, and the fourth indication information indicates that a charging mode is a super fast charging mode.

In some examples, the first interface further includes a battery level of the second battery.

In the foregoing method, the second device may display indication information of the super fast charging mode and the battery level of the second battery. In this way, a user can intuitively perceive a current charging rate and current charging effect (not a conventional non-fast charging mode), so that user experience is improved.

According to a second aspect, this application provides a charging method, applied to a charging system. The charging system includes a first device and a second device. The method includes: A first battery of the first device outputs a first voltage to a boost chip of the first device. The boost chip receives the first voltage input by the first battery and outputs a second voltage to the second device, where the second voltage is greater than the first voltage. A charge pump chip of the second device receives the second voltage input by the first device and outputs a third voltage to a second battery of the second device, where the second voltage is M times the third voltage, and M is a positive number greater than 1. The second battery receives the third voltage input by the charge pump chip and performs charging.

The charge pump chip is configured to output a voltage whose numerical value is 1/M of an input voltage in a manner of M-times buck. In this case, a ratio of the input voltage to the output voltage of the charge pump chip is M:1. The charge pump chip may be further configured to output a voltage whose numerical value is M times of an input voltage in a manner of M-times boost. In this case, a ratio of the input voltage to the output voltage of the charge pump chip is 1:M. The boost chip is configured to output a voltage greater than an input voltage in a manner of continuous and linear adjustment. In other words, the output voltage of the boost chip is any value greater than the input voltage.

In a possible implementation, the method further includes: A first charging management chip of the first device receives first request information sent by a second charging management chip of the second device according to a fast charging protocol, where the first request information is used to request a voltage of a first voltage value. The first charging management chip sends first indication information to the boost chip, where the first indication information indicates the boost chip to output a voltage of the first voltage value. That the boost chip receives the first voltage input by the first battery and outputs the second voltage to the second device includes: The boost chip receives the first voltage and outputs the second voltage of the first voltage value to the second device based on the first indication information.

In a possible implementation, the first voltage value is determined by the charge pump chip based on a second voltage value and a ratio M corresponding to the charge pump chip, the second voltage value is a charging voltage value that is required by the second battery and that is obtained by the charge pump chip, and the first voltage value is M times the second voltage value.

In a possible implementation, the second voltage value is an obtained charging voltage value required by the second battery of a first battery level. After the second battery receives the third voltage input by the charge pump chip and performs charging, the method further includes: The first charging management chip receives second request information sent by the second charging management chip according to the fast charging protocol, where the second request information is used to request a voltage of a third voltage value, the third voltage value is determined by the charge pump chip based on a fourth voltage value and the buck ratio M corresponding to the charge pump chip, the fourth voltage value is a charging voltage value that is required by the second battery of a second battery level and that is obtained by the charge pump chip, and the third voltage value is M times the fourth voltage value. The first charging management chip sends second indication information to the boost chip, where the second indication information indicates the boost chip to output a voltage of the third voltage value. The boost chip receives the voltage input by the first battery and outputs a fourth voltage of the third voltage value to the second device based on the second indication information. The charge pump chip receives the fourth voltage input by the first device and outputs a fifth voltage to the second battery, where the fourth voltage is M times the fifth voltage. The second battery receives the fifth voltage input by the charge pump chip and performs charging.

In a possible implementation, the second battery level is greater than the first battery level, the fourth voltage value is greater than the second voltage value, and the third voltage value is greater than the first voltage value.

In a possible implementation, the fast charging protocol is a smart charging protocol SCP, a universal fast charging specification UFCS, or a quick charge QC protocol.

In a possible implementation, the method further includes: The first charging management chip of the first device and the second charging management chip of the second device perform a handshake according to a power delivery PD protocol, and identify that the first device is a charging device and the second device is a to-be-charged device.

In a possible implementation, that the first charging management chip of the first device and the second charging management chip of the second device perform the handshake according to the power delivery PD protocol, and identify that the first device is a charging device and the second device is a to-be-charged device includes: The first device receives a first user operation, where the first user operation is used to set a connection mode of the first device and the second device to a reverse charging mode. The first charging management chip and the second charging management chip perform the handshake according to the PD protocol, and identify that the first device is a charging device and the second device is a to-be-charged device.

In a possible implementation, that the boost chip receives the first voltage input by the first battery and outputs the second voltage to the second device includes: The boost chip receives the first voltage and outputs the second voltage and a first current to the second device. After the second battery receives the third voltage input by the charge pump chip and performs charging, the method further includes: The first charging management chip of the first device receives third request information sent by the second charging management chip of the second device according to the fast charging protocol, where the third request information is used to request a current of a first current value, and the first current value is different from a numerical value of the first current. The first charging management chip sends third indication information to the boost chip, where the third indication information indicates the boost chip to output a current of the first current value. The boost chip receives the voltage input by the first battery and outputs the second voltage and a second current of the first current value to the second device based on the third indication information.

In a possible implementation, the method further includes: The second device displays a first interface, where the first interface includes fourth indication information, and the fourth indication information indicates that a charging mode is a super fast charging mode.

According to a third aspect, this application provides a first device, including a boost chip, a first battery, and a first charging management chip. The first charging management chip is configured to receive, according to a fast charging protocol, first request information sent by a second device, where the first request information is used to request a voltage of a first voltage value, the first voltage value is determined by the second device based on a second voltage value and a ratio M corresponding to a charge pump chip of the second device, and the second voltage value is a charging voltage value that is required by a second battery of the second device and that is obtained by the second device. The first charging management chip is configured to send first indication information to the boost chip, where the first indication information indicates the boost chip to output a voltage of the first voltage value. The first battery is configured to output a first voltage to the boost chip. The boost chip is configured to: receive the first voltage input by the first battery and output a second voltage of the first voltage value to the second device based on the first indication information, where the second voltage is received by the charge pump chip and is used by the charge pump chip to output a third voltage, the third voltage is used to charge the second battery, the second voltage is M times the third voltage, and M is a positive number greater than 1.

The charge pump chip is configured to output a voltage whose numerical value is 1/M of an input voltage in a manner of M-times buck. In this case, a ratio of the input voltage to the output voltage of the charge pump chip is M:1. The charge pump chip may be further configured to output a voltage whose numerical value is M times of an input voltage in a manner of M-times boost. In this case, a ratio of the input voltage to the output voltage of the charge pump chip is 1:M. The boost chip is configured to output a voltage greater than an input voltage in a manner of continuous and linear adjustment. In other words, the output voltage of the boost chip is any value greater than the input voltage.

In the foregoing method, the second device serving as a to-be-charged device may request the voltage of the specific first voltage value from the first device according to the fast charging protocol. The first device may indicate, based on the request, the boost chip to output the voltage of the first voltage value to the second device. In addition, the first voltage value is determined based on the currently-obtained charging voltage value required by the second battery and the fixed ratio M corresponding to the charge pump chip. This can ensure that after the charge pump chip performs M-times buck on the voltage input by the first device to the second device, a voltage input to the second battery is the charging voltage currently required by the second battery, to avoid a case in which a charging process is inefficient or even normal charging cannot be performed because the voltage output by the charging device to the to-be-charged device does not meet a requirement of the to-be-charged device, so that a charging process is more efficient and stable.

In a possible implementation, the first voltage value is M times the second voltage value.

In a possible implementation, the second voltage value is an obtained charging voltage value required by the second battery of a first battery level. The first charging management chip is further configured to: after the boost chip receives the first voltage input by the first battery and outputs the second voltage of the first voltage value to the second device, receive, according to the fast charging protocol, second request information sent by the second device, where the second request information is used to request a voltage of a third voltage value, the third voltage value is determined by the second device based on a fourth voltage value and the ratio M corresponding to the charge pump chip, the fourth voltage value is an obtained charging voltage value required by the second battery of a second battery level, and the third voltage value is M times the fourth voltage value. The first charging management chip is further configured to send second indication information to the boost chip, where the second indication information indicates the boost chip to output a voltage of the third voltage value. The boost chip is further configured to: receive the first voltage input by the first battery and output a fourth voltage of the third voltage value to the second device based on the second indication information, where the fourth voltage is received by the charge pump chip and is used by the charge pump chip to output a fifth voltage, the fifth voltage is used to charge the second battery, and the fourth voltage is M times the fifth voltage.

In a possible implementation, the second battery level is greater than the first battery level, the fourth voltage value is greater than the second voltage value, and the third voltage value is greater than the first voltage value.

In a possible implementation, the fast charging protocol is a smart charging protocol SCP, a universal fast charging specification UFCS, or a quick charge QC protocol.

In a possible implementation, the first charging management chip is further configured to: perform a handshake according to a power delivery PD protocol with the second device, and identify that the first device is a charging device and the second device is a to-be-charged device.

For example, after the first device receives a first user operation, the first charging management chip performs the handshake according to the PD protocol with the second device, and identifies that the first device is a charging device and the second device is a to-be-charged device, where the first user operation is used to set a connection mode of the first device and the second device to a reverse charging mode.

In a possible implementation, the boost chip is further configured to: receive the first voltage input by the first battery and output the second voltage and a first current to the second device based on the first indication information. The first charging management chip is further configured to receive, according to the fast charging protocol, third request information sent by the second device, where the third request information is used to request a current of a first current value, and the first current value is different from a numerical value of the first current. The first charging management chip is further configured to send third indication information to the boost chip, where the third indication information indicates the boost chip to output a current of the first current value. The boost chip is further configured to: receive the voltage input by the first battery and output the second voltage and a second current of the first current value to the second device based on the third indication information.

According to a fourth aspect, this application provides a second device, including a charge pump chip, a first battery, and a first charging management chip. The first charging management chip is configured to send first request information to a first device according to a fast charging protocol, where the first request information is used to request a voltage of a first voltage value, the first voltage value is determined by the charge pump chip based on a second voltage value and a ratio M corresponding to the charge pump chip, and the second voltage value is a charging voltage value that is required by the first battery and that is obtained by the charge pump chip. The charge pump chip is configured to: receive a first voltage that is input by the first device based on the first request information, and output a second voltage to the first battery, where the first voltage is M times the second voltage, M is a positive integer greater than 1, and a value of the first voltage is the first voltage value. The first battery is configured to: receive the second voltage input by the charge pump chip and perform charging.

The charge pump chip is configured to output a voltage whose numerical value is 1/M of an input voltage in a manner of M-times buck. In this case, a ratio of the input voltage to the output voltage of the charge pump chip is M:1. The charge pump chip may be further configured to output a voltage whose numerical value is M times of an input voltage in a manner of M-times boost. In this case, a ratio of the input voltage to the output voltage of the charge pump chip is 1:M.

In the foregoing method, the second device serving as a to-be-charged device may request the voltage of the specific first voltage value from the first device according to the fast charging protocol. The first device may output the voltage of the first voltage value to the second device based on the request. In addition, the first voltage value is determined based on the currently-obtained charging voltage value required by the first battery and the fixed ratio M corresponding to the charge pump chip. This can ensure that after the charge pump chip performs M-times buck on the voltage input by the first device to the second device, a voltage input to the first battery is the charging voltage currently required by the first battery, to avoid a case in which a charging process is inefficient or even normal charging cannot be performed because the voltage output by the charging device to the to-be-charged device does not meet a requirement of the to-be-charged device, so that a charging process is more efficient and stable.

In a possible implementation, the first voltage value is M times the second voltage value, the first voltage is output by a boost chip of the first device after the boost chip receives a third voltage input by a second battery of the first device, and the first voltage is greater than the third voltage.

The boost chip is configured to output a voltage greater than an input voltage in a manner of continuous and linear adjustment. In other words, the output voltage of the boost chip is any value greater than the input voltage.

In the foregoing method, the first device serving as a charging device may boost a voltage provided by the second battery and output a voltage to the second device by using the boost chip, and the second device serving as a to-be-charged device may perform M-times buck on the voltage input by the first device and output a voltage to charge the first battery by using the charge pump chip. Both the boost chip and the charge pump chip can provide a high output voltage, to increase a power of wired reverse charging, so as to increase a charging speed. In addition, a voltage output by the boost chip of the charging device to the charge pump chip of the to-be-charged device may be continuously and linearly adjusted. Regardless of a voltage value required by the battery of the to-be-charged device, the boost chip can output M times of the voltage value to the charge pump chip, so that the charge pump chip inputs a voltage of the voltage value to the first battery for charging, instead of a manner in which the charging device outputs a voltage to the charge pump chip of the to-be-charged device by using a charge pump chip. This avoids a case in which normal charging cannot be performed (for example, abnormality is reported and charging is stopped) when a voltage output by the first battery and a voltage output by the second battery do not match the fixed ratio M, and can implement high-power and high-speed wired reverse charging in a general scenario.

In a possible implementation, the second voltage value is an obtained charging voltage value required by the second battery of a first battery level. The first charging management chip is further configured to: after the first battery receives the second voltage input by the charge pump chip and performs charging, send second request information to the first device according to the fast charging protocol, where the second request information is used to request a voltage of a third voltage value, the third voltage value is determined by the charge pump chip based on a fourth voltage value and the ratio M corresponding to the charge pump chip, the fourth voltage value is a charging voltage value that is required by the second battery of a second battery level and that is obtained by the charge pump chip, and the third voltage value is M times the fourth voltage value. The charge pump chip is further configured to: receive a fourth voltage that is input by the first device based on the second request information, and output a fifth voltage to the first battery, where the fourth voltage is M times the fifth voltage, and a value of the fourth voltage is the third voltage value. The first battery is further configured to: receive the fifth voltage input by the charge pump chip and perform charging.

In a possible implementation, the second battery level is greater than the first battery level, the fourth voltage value is greater than the second voltage value, and the third voltage value is greater than the first voltage value.

In a possible implementation, the fast charging protocol is a smart charging protocol SCP, a universal fast charging specification UFCS, or a quick charge QC protocol.

In a possible implementation, the first charging management chip is further configured to: perform a handshake according to a power delivery PD protocol with the first device, and identify that the first device is a charging device and the second device is a to-be-charged device.

In a possible implementation, the charge pump chip is further configured to: receive the first voltage and a first current that are input by the first device based on the first request information, and output the second voltage and a second current to the first battery, where the second current is related to the first current. The first battery is further configured to: receive the second voltage and the second current that are input by the charge pump chip and perform charging. The first charging management chip is further configured to send third request information to the first device according to the fast charging protocol, where the third request information is used to request a current of a first current value, and the first current value is different from a numerical value of the first current. The charge pump chip is further configured to: receive the first voltage and a third current that are input by the first device based on the third request information, and output the second voltage and a fourth current to the first battery, where a numerical value of the third current is the first current value, and the fourth current is related to the third current. The first battery is further configured to: receive the second voltage and the fourth current that are input by the charge pump chip and perform charging.

In a possible implementation, the second device includes a display, and the display is configured to display a first interface, where the first interface includes indication information, and the indication information indicates that a charging mode is a super fast charging mode.

According to a fifth aspect, this application provides a computer storage medium. The computer storage medium stores a computer program. When the computer program is executed by a processor, the charging method according to the second aspect of this application and any one of the implementations of the second aspect is implemented.

According to a sixth aspect, this application provides a computer program product. When the computer program product is run on an electronic device, the electronic device is enabled to implement the charging method according to the second aspect of this application and any one of the implementations of the second aspect.

According to a seventh aspect, an embodiment of this application provides an electronic device. The electronic device includes the method or the apparatus for executing any implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this specification do not necessarily mean a same implementation. Further, the technical features, technical solutions, and beneficial effects described in implementations may be combined in any appropriate manner. A person skilled in the art may understand that this application may be implemented without one or more specific technical features, technical solutions, or beneficial effect in a specific implementation. In another implementation, additional technical features and beneficial effects may be further identified in a specific implementation that does not reflect all implementations.

### BRIEF DESCRIPTION OF DRAWINGS

The following describes the accompanying drawings used in this application.
FIG. 1 is a diagram of a wired reverse charging scenario according to this application;
FIG. 2 is a diagram of a hardware structure of an electronic device according to this application;
FIG. 3 is a diagram of an architecture of wired reverse charging according to this application;
FIG. 4 is a diagram of another architecture of wired reverse charging according to this application;
FIG. 5 is a diagram of another architecture of wired reverse charging according to this application;
FIG. 6 is a diagram of an architecture of a charging system according to this application;
FIG. 7A and FIG. 7B are diagrams of user interfaces according to this application;
FIG. 8(A) and FIG. 8(B) are diagrams of other user interfaces according to this application; and
FIG. 9A and FIG. 9B are a schematic flowchart of a charging method according to this application.

### DESCRIPTION OF EMBODIMENTS

The following describes technical solutions in embodiments of this application with reference to accompanying drawings. It is clearly that the described embodiments are some but not all of embodiments of this application. All other embodiments obtained by a person of ordinary skill in the art based on embodiments of this application without creative efforts shall fall within the protection scope of this application.

In the descriptions of embodiments this application, unless otherwise stated, "/" means "or". For example, A/B may indicate A or B. In this specification, "and/or" describes only an association relationship between associated objects and indicates that there may be three relationships. For example, A and/or B may indicate the following three cases: Only A exists, both A and B exist, and only B exists. In addition, in the descriptions of embodiments of this application, "a plurality of" means two or more.

In the following, the terms "first" and "second" are merely intended for the purpose of description, and shall not be understood as an indication or implication of relative importance or implicit indication of a quantity of indicated technical features. Therefore, a feature defined by "first" or "second" may explicitly or implicitly include one or more features.

In embodiments of this application, an expression such as "example" or "for example" represents giving an example, an illustration, or a description. Any embodiment or design scheme described as an "example" or "for example" in embodiments of this application shall not be explained as being more preferred or having more advantages than another embodiment or design scheme.

An embodiment of this application provides an electronic device. The electronic device may be, for example, a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a smart television or a smart camera, a wearable device such as a smart band, a smart watch, or smart glasses, an extended reality (extended reality, XR) device such as an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

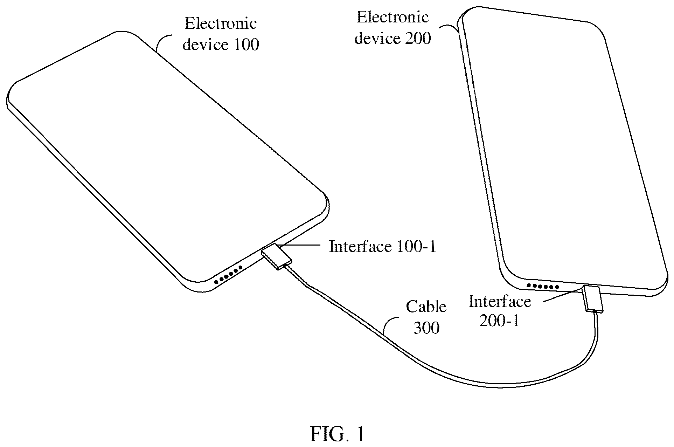

In the electronic device provided in this embodiment of this application, a battery of the electronic device can be charged, and the battery can also be used as a power supply to supply power to an external electronic device (which may be briefly referred to as an external device). A process of charging the battery of the electronic device in a wired or wireless manner is forward charging. Wired forward charging is, for example, charging the battery of the electronic device by using a power adapter. Wireless forward charging is, for example, charging the battery of the electronic device by using a wireless charging cradle. A process in which the electronic device uses electric energy stored in the battery of the electronic device to charge the external device in a wired or wireless manner is reverse charging. In this case, the electronic device may be referred to as a charging device, and the external device may be referred to as a to-be-charged device. Wired reverse charging is, for example, that the electronic device is connected to the external device through a universal serial bus (universal serial bus, USB) or an on-the-go (on-the-go, OTG) cable and charges the external device. A specific example may be shown in FIG. 1. Wireless reverse charging is, for example, using a wireless coil to transmit a wireless charging signal to an external device that supports wireless charging to charging the external device.

FIG. 1 is a diagram of an example of a wired reverse charging scenario.

As shown in FIG. 1, an interface 100-1 of an electronic device 100 is connected to an interface 200-1 of an electronic device 200 through a cable 300. The cable 300 may be but is not limited to a USB or an OTG cable. The interface 100-1 or the interface 200-1 may be but is not limited to a mini USB interface, a micro USB interface, a USB Type-C interface, a Dock interface, a Lighting interface, or the like. In some scenarios, the electronic device 100 may serve as a charging device to charge the electronic device 200 (a to-be-charged device). For example, the electronic device 100 may use a battery as a power supply to output a charging voltage and a charging current through the interface 100-1, and the electronic device 200 may receive, through the interface 200-1, the charging voltage and the charging current that are transmitted through the cable 300, and charges a battery of the electronic device 200. In some other scenarios, the electronic device 200 may alternatively serve as a charging device to charge the electronic device 100 (a to-be-charged device). A specific example is similar to the foregoing example. Details are not described again. It may be understood that a charging device and a to-be-charged device in wired reverse charging are relative role concepts instead of physical concepts.

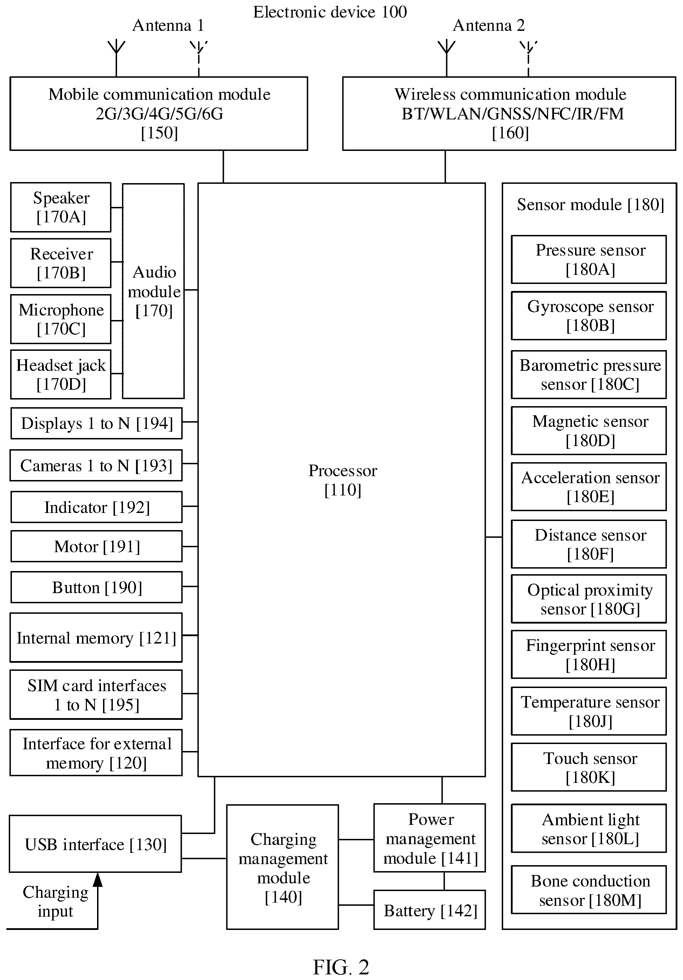

FIG. 2 is a diagram of an example of a hardware structure of an electronic device 100.

It should be understood that the electronic device 100 shown in FIG. 2 is merely an example of the electronic device. The electronic device 100 may have more or fewer components than those shown in the figure, and two or more components may be combined, or different component configurations may be used. Various components shown in FIG. 2 may be implemented in hardware including one or more signal processing and/or application-specific integrated circuits, software, or a combination of hardware and software.

As shown in FIG. 2, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a time sequence signal, to complete control of instruction reading and instruction execution.

A memory may be further disposed in the processor 110, and is configured to store instructions and data. In an implementation, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be but is not limited to a mini USB interface, a micro USB interface, a USB Type-C interface, or the like. The USB interface 130 may be configured to connect to a power adapter to perform forward charging on the electronic device 100, or may be connected to a to-be-charged device to perform reverse charging on the to-be-charged device, or may be configured to transmit data between the electronic device 100 and another device. The processor 110 may be connected to the USB interface 130, and the processor 110 may determine, based on a signal of the USB interface 130, a type of an apparatus connected to the USB interface 130.

The charging management module 140 may be configured to receive a charging input from a charger, to implement a forward charging process of the electronic device 100. The charger may be a wireless charger (for example, the foregoing wireless charging cradle), or may be a wired charger (for example, the foregoing power adapter). In some implementations of wired forward charging, the charging management module 140 may receive a charging input of a wired charger through the USB interface 130. In some implementations of wireless forward charging, the charging management module 140 may receive a wireless charging input through a wireless charging coil of the electronic device 100. When charging the battery 142, the charging management module 140 may further supply power to the electronic device 100 by using the power management module 141.

In this embodiment of this application, the charging management module 140 may be further configured to output a power supply, to perform reverse charging on an external device. In this case, the electronic device 100 is a charging device, and the external device is a to-be-charged device. In some implementations of wired reverse charging, the processor 110 may control the charging management module 140 to convert a voltage provided by the battery 142 into a voltage for charging a to-be-charged device connected to the USB interface 130, to charge the to-be-charged device. A voltage and a current that are output by the charging management module 140 and that are used to charge the to-be-charged device are adjustable.

The charging management module 140 may be further configured to receive a charging input from an external device, to implement a charging process in which the external device serves as a charging device and the electronic device 100 serves as a to-be-charged device. In some implementations of wired charging, the charging management module 140 may receive, through the USB interface 130, a charging voltage and a charging current that are provided by a charging device.

In an implementation, the charging management module 140 may include but is not limited to at least one of the following chips (for example, integrated circuits (integrated circuits, ICs)): a buck charger (buck charger) chip, a charge pump (charge pump) chip, or a boost (boost) chip. The buck charger chip may buck an input voltage to output a voltage less than the input voltage, which may be referred to as a forward buck function. The buck charger chip may further boost an input voltage to output a voltage greater than the input voltage, which may be referred to as a reverse boost function. The charge pump chip may increase an input voltage to N times of the input voltage in a manner of N-times boost. In other words, the input voltage and an output voltage are in a relationship of 1:N. This may be referred to as a boost function. The charge pump chip may also decrease an input voltage to 1/M of the input voltage in a manner of M-times buck. In other words, the input voltage and an output voltage are in a relationship of M:1. This may be referred to as a buck function. Both N and M are positive numbers greater than 1. In other words, an input voltage and an output voltage of the charge pump chip are proportional to each other. The boost chip may boost an input voltage to output a voltage greater than the input voltage, and the boost chip may continuously and linearly adjust an output voltage.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In another implementation, the power management module 141 may alternatively be disposed in the processor 110. In another implementation, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. The display 194 is configured to display an image, a video, and the like.

The electronic device 100 may implement a photographing function through the ISP, the camera 193, the video codec, the GPU, the display 194, the application processor and the like.

The electronic device 100 may implement an audio function, for example, music playing and recording, through the audio module 170, the speaker 170A, the receiver 170B, the microphone 170C, the headset jack 170D, the application processor, and the like.

An example of a hardware structure of the electronic device 200 is similar to the hardware structure of the electronic device 100 shown in FIG. 2. Details are not described again.

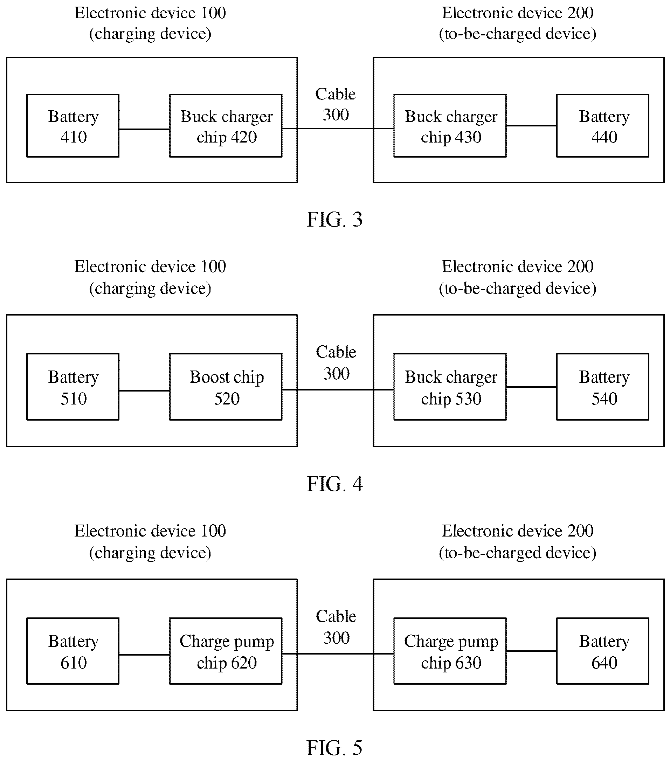

For ease of description, in the following embodiments, an example in which the electronic device 100 is a charging device and the electronic device 200 is a to-be-charged device is used to describe a wired reverse charging process. Currently, a wired reverse charging process may be implemented in a manner 1 shown in FIG. 3, a manner 2 shown in FIG. 4, or a manner 3 shown in FIG. 5.

FIG. 3 is a diagram of an example of an architecture of wired reverse charging implemented in the manner 1.

As shown in FIG. 3, an electronic device 100 may include a battery 410 and a buck charger (buck charger) chip 420, and an electronic device 200 may include a buck charger chip 430 and a battery 440. When wired reverse charging is performed, the battery 410 of the electronic device 100 may provide a voltage 11 to the buck charger chip 420, and the buck charger chip 420 may boost the input voltage 11 by using a reverse boost function, and output a voltage 12 greater than the voltage 11. The voltage 12 and a corresponding current that are output by the buck charger chip 420 may be transmitted to the electronic device 200 through a cable 300. The buck charger chip 430 of the electronic device 200 may buck the input voltage 12 by using a forward buck function, and output a voltage 13 less than the voltage 12. The voltage 13 output by the buck charger chip 430 may be provided to the battery 440 for charging.

Due to limitations of a structure, an operating manner, and a power inductor of the buck charger chip, the voltage 12 output by the buck charger chip 420 by using the reverse boost function is a small fixed value, for example, approximately 5 volts (volts, V), and the voltage 13 that is output by the buck charger chip 430 and that is used to charge the battery 440 is also a small fixed value. As a result, a power of reverse charging is low, for example, approximately 6 watts (watts, W). Consequently, a speed of wired reverse charging implemented in the manner 1 is very low, and fast charging cannot be implemented, severely affecting user experience.

FIG. 4 is a diagram of an example of an architecture of wired reverse charging implemented in the manner 2.

As shown in FIG. 4, an electronic device 100 may include a battery 510 and a boost (boost) chip 520, and an electronic device 200 may include a buck charger chip 530 and a battery 540. When wired reverse charging is performed, the electronic device 100 and the electronic device 200 may perform a handshake and communication according to a battery charging (battery charging, BC) protocol. The BC protocol may be the BC1.2 protocol. In the BC1.2 protocol, an output voltage may be 5 V, and a current value may be 1.5 amperes (amperes, A) or 2 A. Based on the BC protocol, the battery 510 of the electronic device 100 may provide a voltage 21 to the boost chip 520, and the boost chip 520 may boost the input voltage 21 and output a voltage 22 greater than the voltage 21. The voltage 22 and a corresponding current that are output by the boost chip 520 may be transmitted to the electronic device 200 through a cable 300. The buck charger chip 530 of the electronic device 200 may buck the input voltage 22 by using a forward buck function, and output a voltage 23 less than the voltage 22. The voltage 23 output by the buck charger chip 530 may be provided to the battery 540 for charging.

Due to limitations of a structure, an operating manner, and a power inductor of the buck charger chip 530 of the peer end (namely, the electronic device 200), a charging protocol that can be used is generally a non-fast charging protocol such as the BC protocol, the voltage 22 provided by the boost chip 520 based on the BC protocol is low, for example, approximately 5 V, a corresponding current is also low, for example, approximately 2 A, and the voltage 23 that is output by the buck charger chip 530 and that is used to charge the battery 540 is also a small fixed value. As a result, a power of reverse charging is low. Consequently, a speed of wired reverse charging implemented in the manner 2 is very low, and fast charging cannot be implemented, severely affecting user experience.

FIG. 5 is a diagram of an example of an architecture of wired reverse charging implemented in the manner 3.

As shown in FIG. 5, an electronic device 100 may include a battery 610 and a charge pump (charge pump) chip 620, and an electronic device 200 may include a charge pump chip 630 and a battery 640. When wired reverse charging is performed, the battery 610 of the electronic device 100 may provide a voltage 31 to the charge pump chip 620, and the charge pump chip 620 may perform N-times boost on the input voltage 31 and output a voltage 32, where the voltage 32: the voltage 31=N:1. The voltage 32 and a corresponding current that are output by the charge pump chip 620 may be transmitted to the electronic device 200 through a cable 300. The charge pump chip 630 of the electronic device 200 may perform M-times buck on the input voltage 32 and output a voltage 33, where the voltage 33: the voltage 32=1:M. The voltage 33 output by the charge pump chip 630 may be provided to the battery 640 for charging.

A structure and an operating manner of the charge pump chip enable the charge pump chip to provide a high output voltage and withstand a high input voltage. Therefore, the voltage 33 for charging the battery 640 may be high, and a power of reverse charging is also high, so that fast charging can be implemented. However, an output voltage and an input voltage of the charge pump chip are in a fixed ratio. If the voltage 31 that can be provided by the battery 610 of the electronic device 100 and the charging voltage 33 required by the battery 640 of the electronic device 200 cannot match the fixed ratio, a report of abnormality may be caused, and normal charging cannot be performed. For example, it is assumed that N is 2, M is 2, a voltage that can be provided by the battery 610 is 4 V, and a charging voltage required by the battery 640 of the battery 200 is 3 V. If an output voltage of the charge pump chip 630 is expected to be the charging voltage (3 V) required by the battery 640, an input voltage needs to be M times the output voltage, namely, 6 V. However, an output voltage obtained by the charge pump chip 620 by performing N-times boost on the input voltage (4 V) is 8 V, which is not 6 V. If the charge pump chip 620 outputs a voltage of 8 V to the charge pump chip 630, a voltage output by the charge pump chip 630 is 4 V, which is different from the charging voltage 3 V required by the battery 640. As a result, although wired reverse charging implemented in the manner 3 can achieve a fast charging speed, the wired reverse charging can be applied only to a case in which the voltage 31 and the voltage 33 match the fixed ratio corresponding to the charge pump chip. Consequently, abnormality is reported between many devices, and normal charging cannot be performed.

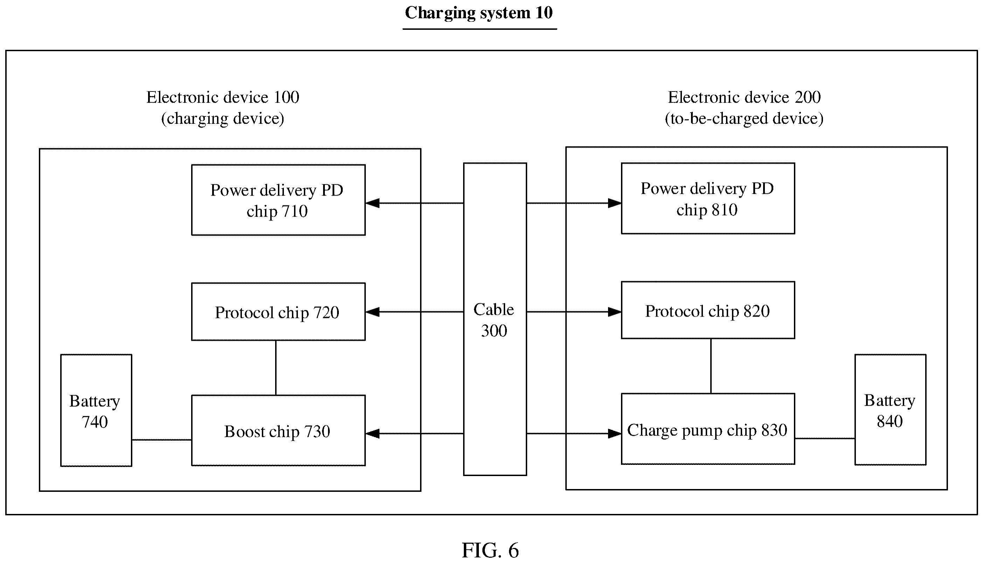

This application provides a charging method, applied to a charging system, to resolve technical problems existing in the manner 1, the manner 2, and the manner 3. For an example of the charging system, refer to FIG. 6.

FIG. 6 is a diagram of an architecture of a charging system 10 according to this application.

As shown in FIG. 6, the charging system 10 may include an electronic device 100 and an electronic device 200. The electronic device 100 serving as a charging device and the electronic device 200 serving as a to-be-charged device may be connected through a cable 300. The electronic device 100 may include a power delivery (power delivery, PD) chip 710, a protocol chip 720, a boost (boost) chip 730, and a battery 740. The electronic device 200 may include a PD chip 810, a protocol chip 820, a charge pump (charge pump) chip 830, and a battery 840.

The PD chip 710 may be configured to: after the electronic device 100 and the electronic device 200 are connected through the cable 300, perform a handshake according to a PD protocol with the PD chip 810 of the peer end, to identify a primary device/secondary device, for example, determine whether the electronic device 100 is a charging device (namely, a primary device) or a to-be-charged device (namely, a secondary device), so as to subsequently perform charging in a charging direction in which the primary device supplies power to the secondary device. In FIG. 6, an example in which the electronic device 100 is a primary device and the electronic device 200 is a secondary device is used for description. In an implementation, the PD chip 710/PD chip 810 may be further configured to change a charging direction, for example, determine the electronic device 100 that is originally a primary device as a secondary device, and determine the electronic device 200 that is originally a secondary device as a primary device. The PD chip 710 and the PD chip 810 may communicate with each other through a configuration channel (configuration channel, CC) pin of the cable 300.

The protocol chip 720 may be configured to perform a handshake and communication according to a fast charging protocol with the protocol chip 820 of the peer end, for example, negotiate, according to the fast charging protocol, a voltage/current/power that is output by the electronic device 100 to the electronic device 200. The fast charging protocol may include but is not limited to a smart charging protocol (smart charging protocol, SCP), a universal fast charging specification (universal fast charging specification, UFCS), and a quick charge (quick charge, QC) protocol. The protocol chip 720 may be further configured to notify the boost chip 730 of the charging voltage/current/power negotiated according to the fast charging protocol, so that the boost chip 730 outputs a corresponding voltage and current. The protocol chip 720 and the protocol chip 820 may communicate with each other through a CC pin of the cable 300.

The battery 740 may be connected to the boost chip 730, for example, through a battery operating mode dedicated pin (VBAT). The battery 740 may be configured to output a voltage and a current to the boost chip 730. Optionally, the voltage and the current that are output by the battery 740 are related to a battery level of the battery 740. The output voltage and the output current vary according to the battery level of the battery 740. The boost chip 730 may be configured to: boost the input voltage and output a higher voltage. For example, the boost chip 730 may be configured to: receive an indication of the protocol chip 720, and output a voltage corresponding to communication content of the fast charging protocol. The boost chip 730 may output a boosted voltage and a corresponding current to the charge pump chip 830 through the cable 300 (for example, a CC pin and/or a power supply pin (VBUS) of the cable).

The battery 840 may be connected to the charge pump chip 830, for example, through a VBAT pin. The charge pump chip 830 may obtain a charging voltage value required by the battery 840, and determine, based on the value and a fixed ratio M corresponding to the charge pump chip 830, a charging voltage value required by the electronic device 200, namely, a numerical value of a voltage that needs to be input to the charge pump chip 830. The charge pump chip 830 may send the determined charging voltage value required by the electronic device 200 to the protocol chip 820, and the protocol chip 820 notifies the protocol chip 720 of the charging voltage value according to the fast charging protocol. The charge pump chip 830 may be configured to receive the output voltage of the boost chip 730 as an input, and perform M-times buck on the input voltage. The charge pump chip 830 may output a bucked voltage to the battery 840, to charge the battery 840. It may also be understood that the charge pump chip 830 is configured to convert a charging power output by the peer end (the electronic device 100), and charge the battery 840.

In some implementations of wired reverse charging, first, the PD chip 710 of the electronic device 100 and the PD chip 810 of the electronic device 200 perform a handshake according to a PD protocol, to determine that the electronic device 100 is a primary device and the electronic device 200 is a secondary device. Then, the charge pump chip 830 of the electronic device 200 may obtain a charging voltage (represented as *V*₁) required by the battery 840 and the fixed ratio (namely, M) used when the charge pump chip 830 performs buck, determine, based on obtained information, a charging voltage *V*₂ *= MV*₁ required by the electronic device 200, and send *V*₂ to the protocol chip 820. When the protocol chip 720 of the electronic device 100 communicates with the protocol chip 820 of the electronic device 200 according to the fast charging protocol, the protocol chip 820 may send, to the protocol chip 720, the charging voltage *V*₂ required by the electronic device 200. The boost chip 730 of the electronic device 100 may boost, under an indication of the protocol chip 720, a voltage input by the battery 740, and output a voltage *V*₂ to the electronic device 200. The charge pump chip 830 of the electronic device 200 may perform M-times buck on the voltage *V*₂ input by the electronic device 100, and output a voltage *V*₁ to the battery 840 for charging. It may be understood that, as charging time is increased, a battery level of the battery 840 of the electronic device 200 is gradually increased, and correspondingly, a charging voltage required by the battery 840 is also gradually increased. In this case, a charging voltage required by the electronic device 200 is also gradually increased. The protocol chip 720 of the electronic device 100 may obtain, based on the fast charging protocol, a charging voltage required by the electronic device 200 in real time, and indicate the boost chip 730 to output the charging voltage to the electronic device 200. The charging voltage required by the battery 840 is continuously changed, and the boost chip 730 may output, to the electronic device 200, a voltage that is related to the charging voltage and that is continuously changed. This well meets a charging requirement of the electronic device 200.

In the architecture shown in FIG. 6, the electronic device 100 serving as a charging device may boost, by using the boost chip 730, a voltage provided by the battery 740, and the electronic device 200 serving as a to-be-charged device may perform M-times buck on the output voltage of the boost chip 730 by using the charge pump chip 830, and charge the battery 840 by using an output voltage. Both the boost chip 730 of the charging device and the charge pump chip 830 of the to-be-charged device can provide a high output voltage. In other words, a charging power is high, and fast charging can be implemented, which resolves the technical problems existing in the manner 1 and the manner 2. In addition, a voltage output by the boost chip 730 of the charging device to the charge pump chip 830 may be continuously and linearly adjusted. Regardless of an input voltage required by the battery 840 of the peer end (the electronic device 200), the boost chip 730 can output, to the charge pump chip 830, M times of the input voltage required by the battery 840. This resolves a problem that the manner 3 can be applied only to a specific case, and implements wired reverse charging with a high power (for example, greater than or equal to 22.5 W) and a high speed in a wide range of scenarios, so that user experience is improved.

In addition, both parties in the charging may negotiate a charging power/voltage/current according to a fast charging protocol. Therefore, the charging device can output a charging voltage required by the to-be-charged device to perform charging. In addition, as a charging process proceeds, a charging voltage required by the to-be-charged device is continuously changed, and the to-be-charged device may notify the charging device of a new charging voltage according to the fast charging protocol, so that the charging device outputs a corresponding and continuously-changed charging voltage to the to-be-charged device, to ensure that an entire charging process can be performed normally and efficiently. In other words, a voltage and a current in the entire charging process can be dynamically adjusted, so that the charging process is better controlled, and flexibility is high.

It may be understood that any module included in the electronic device 100 shown in FIG. 6 may be a hardware module, or may be a software module. Any one of the foregoing modules may be an independent module, or at least one of the foregoing modules may be integrated. For example, the protocol chip and the PD chip in the electronic device 100 and/or the electronic device 200 may be integrated, and an integrated chip may be referred to as a charging management chip. This is not limited in this application.

In some embodiments, a hardware structure of the electronic device 100 shown in FIG. 6 is shown in FIG. 2. At least one of the PD chip 710, the protocol chip 720, and the boost chip 730 shown in FIG. 6 may belong to the charging management module 140, the processor 110, or the power management module 141 shown in FIG. 2.

In some embodiments, a hardware structure of the electronic device 200 shown in FIG. 6 is shown in FIG. 2. At least one of the PD chip 810, the protocol chip 820, and the charge pump chip 830 shown in FIG. 6 may belong to the charging management module 140, the processor 110, or the power management module 141 shown in FIG. 2.

The following describes an example of an application scenario and a user interface in the application scenario in this application.

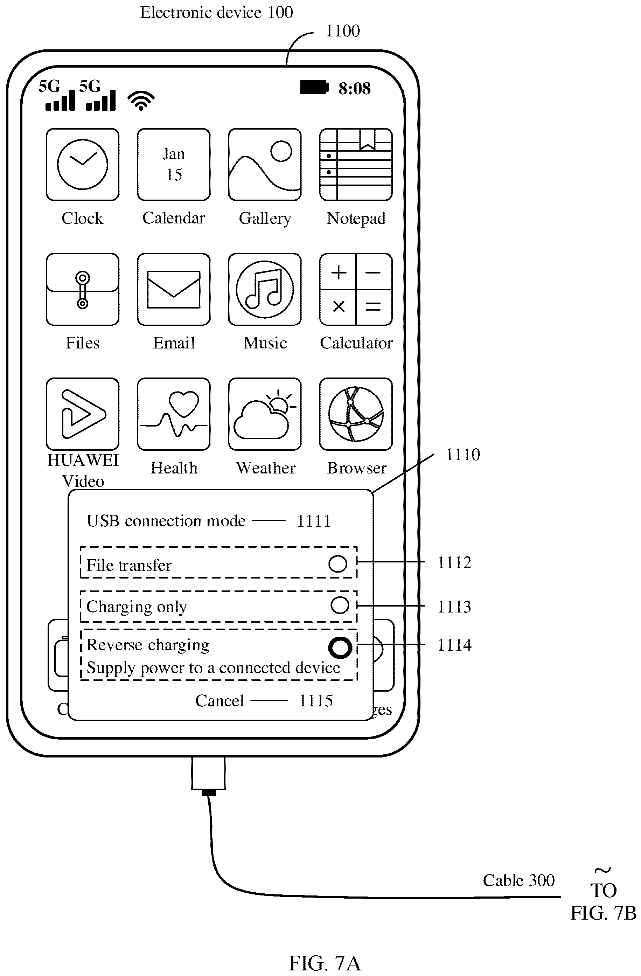

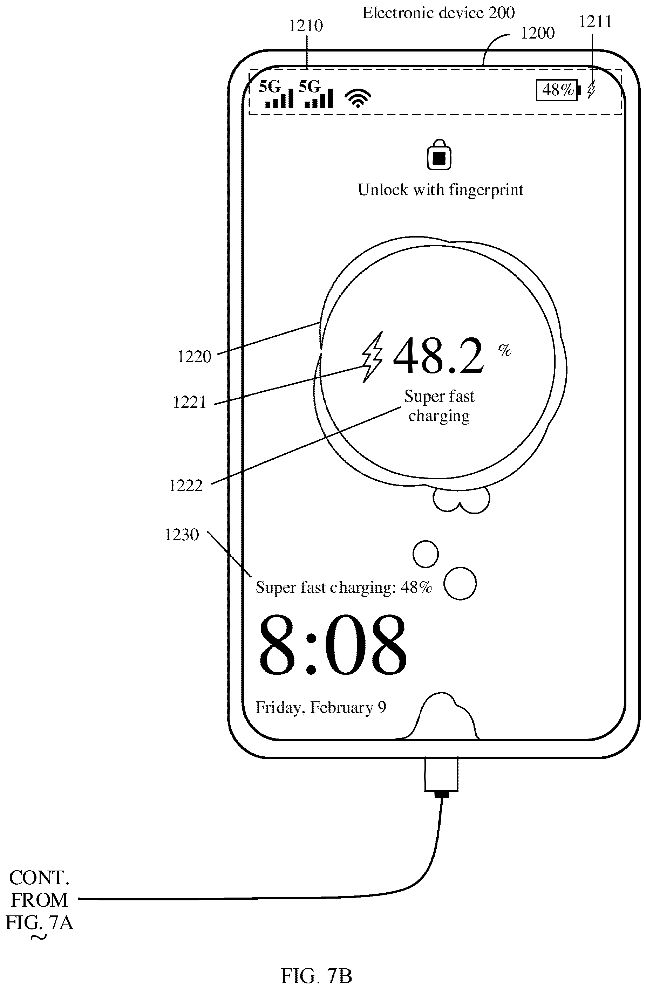

FIG. 7A and FIG. 7B are diagrams of examples of user interfaces in a wired reverse charging scenario.

As shown in FIG. 7A and FIG. 7B, after an electronic device 100 and an electronic device 200 are connected through a cable 300 (a USB cable is used as an example for illustration), the electronic device 100 may display a user interface 1100. In an implementation, the user interface 1100 may be a home screen. The user interface 1100 may include icons of a plurality of applications and a prompt box 1110. The prompt box 1110 may include a title 1111 ("USB connection mode") and options of a plurality of USB modes. The options of the plurality of USB modes include, for example, an option 1112 of a "File transfer" mode, an option 1113 of a "Charging only" mode, and an option 1114 of a "Reverse charging" mode. When the option 1112 is selected, the electronic device 100 and the electronic device 200 may transmit data such as a text, an image, and a file through the cable 300. The option 1113 may also be understood as an option of a "forward charging" mode. When the option 1113 is selected, the electronic device 100 may receive a voltage and a current that are input by the electronic device 200, to charge a battery of the electronic device 100. The option 1114 may include a description "Supply power to a connected device". When the option 1114 is selected, the electronic device 100 may output a voltage and a current to the electronic device 200, to charge the electronic device 200. The prompt box 1110 further includes a cancel option 1115, and the cancel option 1115 is used to cancel all USB modes. In other words, the electronic device 100 and the electronic device 200 do not perform a transmission process through the cable 300. The option 1114 in the user interface 1100 is in a selected state, which may indicate that a currently selected USB connection mode is reverse charging. Therefore, the electronic device 100 may output a voltage and a corresponding current to the electronic device 200 by using a boost chip, and the electronic device 200 may buck the received voltage and charge a battery by using a charge pump chip. In this case, the electronic device 200 may display a user interface 1200. In an implementation, the user interface 1200 is a lock screen interface.

As shown in FIG. 7A and FIG. 7B, the user interface 1200 displayed by the electronic device 200 may include a status bar 1210 at the top, prompt information of "Unlock with fingerprint", a charging animation 1220, charging prompt information 1230, and time information. The status bar 1210 may include an indicator of a mobile communication network, an indicator of a WLAN, an indicator of a battery level (indicating that a current battery level is 48% of a total battery level), and an icon 1211 (indicating that a current charging mode is a super fast charging mode). The charging animation 1220 may include a charging progress indicator 1221 and prompt information 1222 (including characters "Super fast charging"). The indicator 1221 indicates that 48.2% of the total battery level is reached currently and that the current charging mode is the super fast charging mode. Prompt information 1230 includes characters "Super fast charging: 48%".

In FIG. 7A and FIG. 7B, an example in which the USB connection mode is selected on the electronic device 100 is used for description. In another implementation, the USB connection mode may alternatively be selected on the electronic device 200. For example, after the electronic device 100 and the electronic device 200 are connected through the cable 300, the electronic device 200 may display the prompt box 1110 in the user interface 1100 shown in FIG. 7A. This is not limited in this application.

This is not limited to the implementation shown in FIG. 7A and FIG. 7B. In another implementation, the electronic device 200 may first display prompt information, for example, "Do you want to charge the device", and after receiving a user operation, the electronic device 200 performs charging based on a voltage and a current provided by the electronic device 100. This may be understood as performing charging when a user allows the charging.

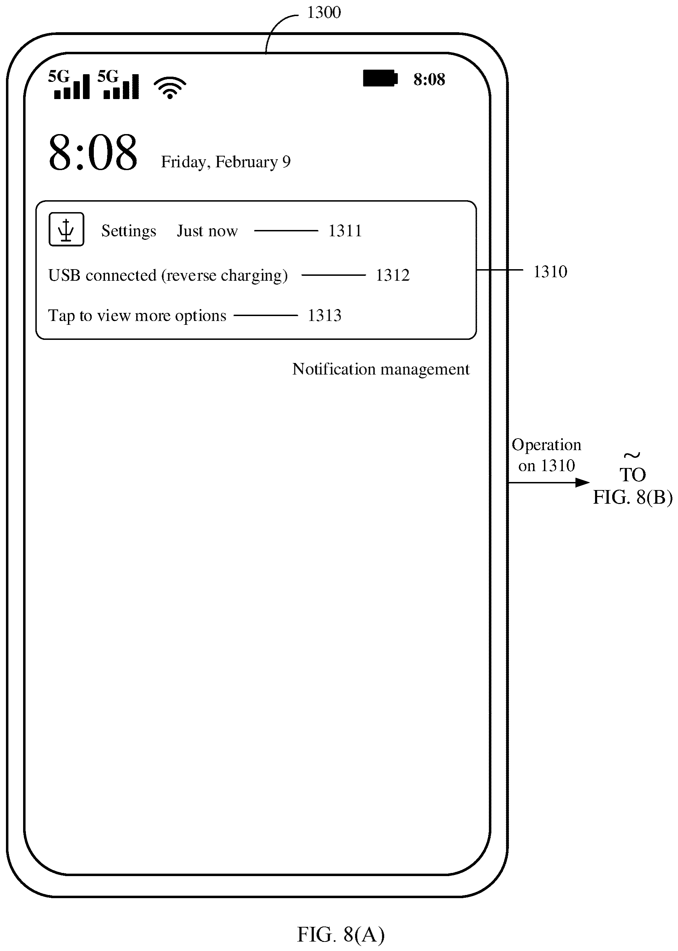

In an implementation, after the implementation shown in FIG. 7A and FIG. 7B, the electronic device 100 may switch the USB connection mode in response to a user operation, for example, switch the USB connection mode by using a notification bar of the electronic device 100 shown in FIG. 8(A). A specific manner for selecting a USB connection mode is not limited in this application.

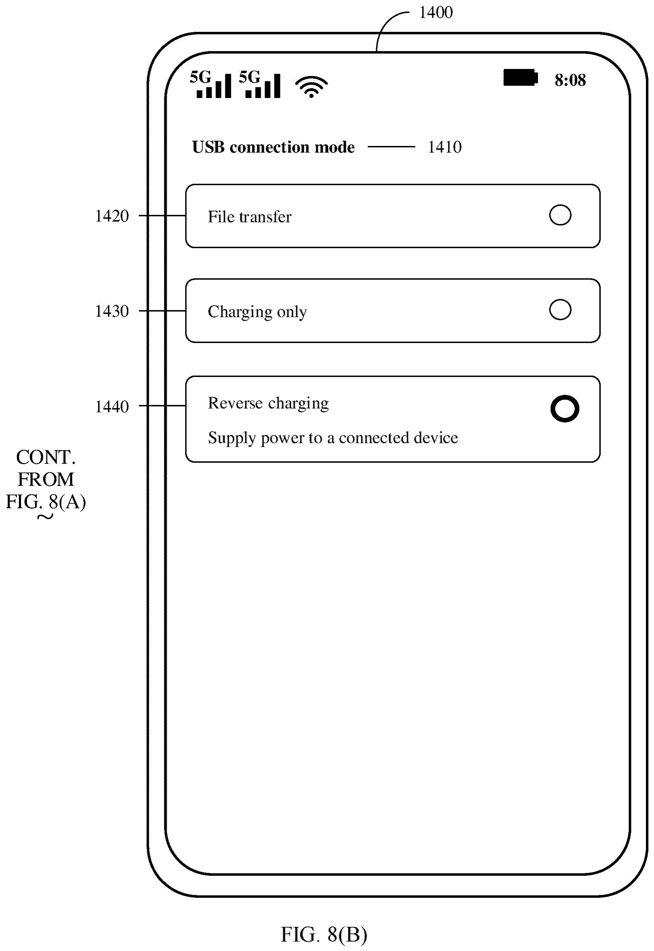

FIG. 8(A) and FIG. 8(B) are diagrams of examples of user interfaces for switching a USB connection mode.

As shown in FIG. 8(A), the electronic device 100 may display a user interface 1300. In an implementation, the user interface 1300 may be a notification interface displayed by the electronic device 100 in response to a user operation of sliding down from an upper edge of a screen. The user interface 1300 may include a notification bar 1310, and the notification bar 1310 may include application information 1311, notification information 1312, and prompt information 1313. The application information 1311 may include "Settings" and "Just now", indicating that the notification bar 1310 is used to display related information of a settings application, and information in the notification bar 1310 is displayed within the past 1 minute (namely, "Just now"). The notification information 1312 may include "USB connected (reverse charging)", indicating that the electronic device 100 is connected to another device (namely, the electronic device 200) through a USB interface, and a connection mode is reverse charging, namely, a mode in which the electronic device 100 outputs a voltage and a current to the electronic device 200 to charge the electronic device 200. The prompt information 1313 may include "Tap to view more options", and is used to prompt a user to view more information, for example, another USB connection mode, by using the notification bar 1310. The electronic device 100 may receive a user operation (for example, a tap operation) performed on the notification bar 1310, and display, in response to the user operation, a setting interface of a USB connection mode. For a specific example, refer to a user interface 1400 shown in FIG. 8(B).

As shown in FIG. 8(B), the user interface 1400 may include a setting name 1410 (including "USB connection mode") and options of a plurality of USB modes. The options of the plurality of USB modes include, for example, an option 1420 of a "File transfer" mode, an option 1430 of a "Charging only" mode, and an option 1440 of a "Reverse charging" mode. Specific descriptions are similar to descriptions of the options of the plurality of USB modes in the prompt box 1110 included in the user interface 1100 shown in FIG. 7A. Details are not described again. The option 1440 in the user interface 1400 is in a selected state, indicating that a current USB connection mode is reverse charging. Alternatively, the user may operate an option other than the option of the "Reverse charging" mode in the options of the plurality of USB modes, to switch the USB connection mode to another mode. In some examples, the electronic device 100 may switch, in response to a user operation (for example, a tap operation) performed on the option 1430, the USB connection mode to "Charging only", namely, a mode in which the electronic device 100 may receive a voltage and a current that are output by another device (namely, the electronic device 200) connected through a USB interface and charge a battery.

In FIG. 8(A) and FIG. 8(B), an example in which the USB connection mode is switched on the electronic device 100 is used for description. In another implementation, the USB connection mode may alternatively be switched on the electronic device 200. A specific example is similar to that in FIG. 8(A) and FIG. 8(B). Details are not described again.

Based on the foregoing embodiments, the following describes a charging method provided in an embodiment of this application.

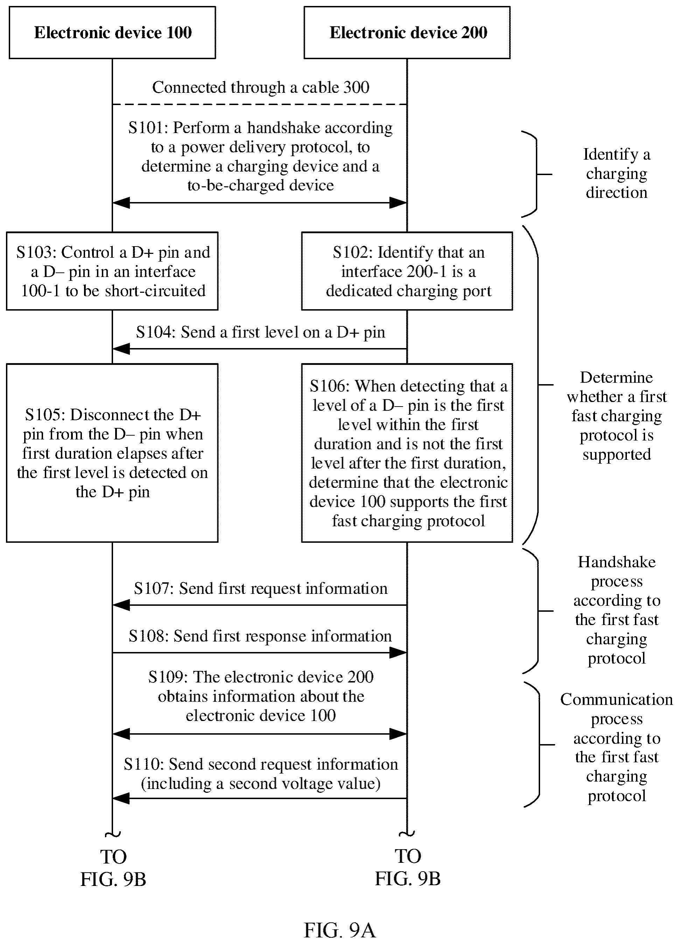

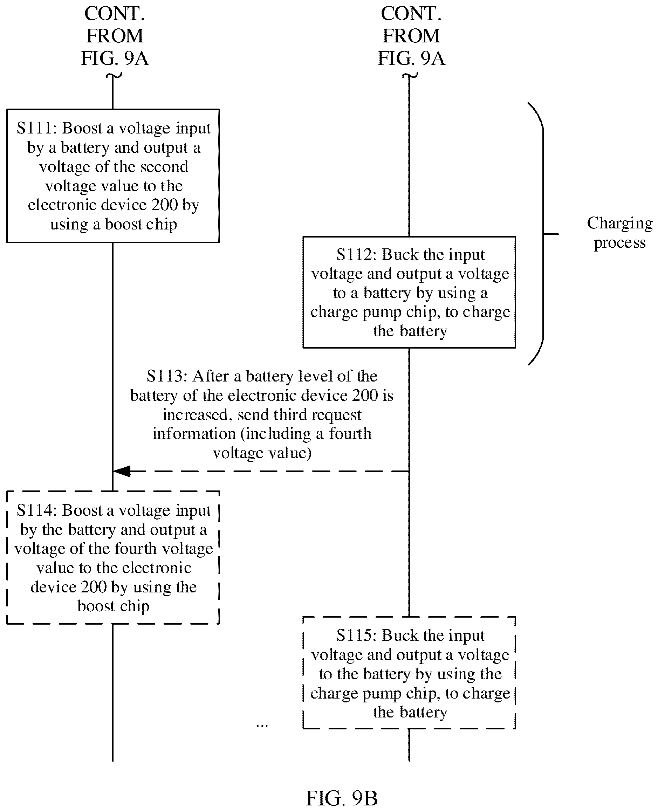

FIG. 9A and FIG. 9B are a schematic flowchart of a charging method according to an embodiment of this application. The method may be applied to the scenario shown in FIG. 1. The method may be applied to the charging system 10 shown in FIG. 6. The method may include but is not limited to the following steps.

S101: An electronic device 100 and an electronic device 200 perform a handshake according to a PD protocol, to determine a charging device and a to-be-charged device.

In an implementation, after being connected through a cable 300, the electronic device 100 and the electronic device 200 may perform the handshake according to the PD protocol, to determine a charging device and a to-be-charged device, and subsequently perform charging in a charging direction in which the charging device sends a voltage and a current to the to-be-charged device. In some examples, the electronic device 100 and the electronic device 200 may determine a charging device and a to-be-charged device based on a level of a CC pin in a USB interface.

In an implementation, the electronic device 100 and the electronic device 200 may determine a charging device and a to-be-charged device according to a preset rule. For example, one of the two devices is randomly selected as a charging device. For another example, the electronic device 100 or the electronic device considers the device itself as a charging device by default. In another implementation, the electronic device 100 and/or the electronic device 200 may determine a charging device and a to-be-charged device in response to a user operation. For example, in the scenario shown in FIG. 7A and FIG. 7B, the electronic device 100 may display the prompt box 1110, then receive a user operation performed on the option 1113 or the option 1114, and determine, based on the option on which the user operation is performed, a corresponding USB connection mode and a charging device and a to-be-charged device in the current USB connection mode.

In an implementation, after determining a charging device and a to-be-charged device, the electronic device 100 and the electronic device 200 may alternatively change a role/charging direction. For example, in the scenario shown in FIG. 8(A) and FIG. 8(B), after the electronic device 100 and the electronic device 200 determine that the electronic device 100 is a charging device and the electronic device 200 is a to-be-charged device, the electronic device 100 may display, in response to a user operation, the user interface 1400 shown in FIG. 8(B), and then determine, in response to a user operation performed on the option 1430 in the user interface 1400, that the electronic device 100 is a to-be-charged device and the electronic device 200 is a charging device.

In FIG. 9A and FIG. 9B, an example in which the electronic device 100 is a charging device and the electronic device 200 is a to-be-charged device is used for description.

S102: The electronic device 200 identifies that an interface 200-1 is a dedicated charging port (dedicated charging port, DCP).

In an implementation, after the electronic device 200 determines a charging device and a to-be-charged device, the electronic device 200 serving as a to-be-charged device may identify a type of the interface 200-1 connected to the electronic device 100 (namely, an interface 200-1 into which the cable 300 is inserted). When identifying that the interface 200-1 is a DCP, the electronic device 200 that supports a first fast charging protocol may perform an action of trying the first fast charging protocol (for example, perform S104), to determine whether the electronic device 100 supports the first fast charging protocol. When an interface of the electronic device is a DCP, the interface is used only for charging and not for data transmission. The first fast charging protocol may be but is not limited to an SCP or a UFCS.

S103: The electronic device 100 controls a data positive (data positive, DP/D+) pin and a data minus (data minus, DM/D-) pin in an interface 100-1 to be short-circuited.

In an implementation, after the electronic device 100 determines a charging device and a to-be-charged device, the electronic device 100 serving as a charging device may perform an action of simulating a charger, that is, control the D+ pin and the D- pin, in the interface 100-1 connected to the electronic device 200 (namely, an interface 200-1 into which the cable 300 is inserted), to be short-circuited.

A sequence of S102 and S103 is not limited. For example, S102 and S103 may be performed simultaneously.

S104: The electronic device 200 sends a first level on a D+ pin in the interface 200-1.

In an implementation, the electronic device 200 serving as a to-be-charged device may try to perform a handshake according to the first fast charging protocol with the charging device of the peer end, that is, send the first level on the D+ pin. For example, the first level is 0.6 V. In some examples, the first fast charging protocol is an SCP, and S104 may be referred to as try SCP (try SCP).

S105: The electronic device 100 disconnects the D+ pin from the D- pin when first duration elapses after the first level is detected on the D+ pin.

In an implementation, when the first duration (for example, 1 second) elapses after the first level sent by the electronic device 200 is detected on the D+ pin in the interface 100-1, the electronic device 100 disconnects a short circuit between the D+ pin and the D- pin in the interface 100-1.

S106: When detecting that a level of the D- pin is the first level within the first duration and is not the first level after the first duration, the electronic device 200 determines that the electronic device 100 supports the first fast charging protocol.

In an implementation, after sending the first level on the D+ pin in the interface 200-1, the electronic device 200 may continuously detect a level of the D- pin in the interface 200-1. When the electronic device 200 detects that the level of the D- pin is the first level within the first duration and is not the first level after the first duration, for example, the electronic device 200 detects that the level of the D- pin is 0.6 V within 1 second and drops to 0 after the 1 second, the electronic device 200 may determine that the electronic device 100 also supports the first fast charging protocol.

A sequence of S105 and S106 is not limited. For example, S105 and S106 may be performed simultaneously.

S107: The electronic device 200 sends first request information to the electronic device 100.

In an implementation, S107 is an optional step.

In an implementation, after determining that the electronic device 100 supports a fast charging protocol, the electronic device 200 may send the first request information to the electronic device 100, to perform a handshake according to the first fast charging protocol. S107 may be understood as a start of the handshake. In some examples, the first fast charging protocol is an SCP, and S107 may be specifically: The electronic device 200 sends a ping signal on the D- pin in the interface 200-1, for example, sends a level of a preset value (for example, 0.6 V).

S108: The electronic device 100 sends first response information to the electronic device 200.

In an implementation, S108 is an optional step.

In an implementation, after receiving the first request information sent by the electronic device 100, the electronic device 100 may send the first response information to the electronic device 200, to perform a handshake according to the first fast charging protocol. S108 may be understood as an end of the handshake. In some examples, the first fast charging protocol is an SCP, and S108 may be specifically: The electronic device 100 sends a response signal on the D-pin in the interface 100-1, for example, sends a level of a preset value (for example, 0.6 V).

S109: The electronic device 200 obtains information about the electronic device 100.

In an implementation, S109 is an optional step.

In an implementation, after the electronic device 100 and the electronic device 200 perform the handshake according to the first fast charging protocol (that is, S107 and S108), a process of reading information about the "charger" may be performed. In other words, the electronic device 200 serving as a to-be-charged device may obtain information about the electronic device 100 serving as a charging device. The obtained information includes but is not limited to, for example, a supported charging power, a supported maximum output voltage, and a supported maximum output current. In some examples, the electronic device 200 may send request information to the electronic device 100, and the electronic device 100 may send information about the electronic device 200 to the electronic device 200 based on the received request information.

S110: The electronic device 200 sends second request information (including a second voltage value) to the electronic device 100.

In an implementation, the electronic device 200 may include a charge pump chip and a battery. The charge pump chip may be configured to perform M-times buck on an input voltage. In other words, an input voltage of the charge pump chip is M times an output voltage, where M is a positive number greater than 1. For details, refer to the descriptions of the charge pump chip in FIG. 1 and FIG. 6.

In an implementation, the electronic device 200 may obtain a battery level (which may be referred to as a first battery level) of the battery of the electronic device 200, and determine, based on the first battery level, a charging voltage (which may be referred to as a first voltage value and represented as *V*₁) required by the battery. The electronic device 200 may further obtain a fixed ratio (namely, M) corresponding to the charge pump chip in the electronic device 200. Then, the electronic device 200 may determine, based on the first voltage value and the fixed ratio corresponding to the charge pump chip, a voltage (which may be referred to as the second voltage value and represented as *V*₂) that needs to be input to the charge pump chip. This may also be referred to as determining a charging voltage *V*₂ *= MV*₁ required by the electronic device 200.

In an implementation, the second request information may be used to request the charging device to output a charging voltage and a charging current, and the second request information may include the second voltage value.

S111: The electronic device 100 boosts a voltage input by a battery and outputs a voltage of the second voltage value to the electronic device 200 by using a boost chip.

In an implementation, the electronic device 100 may include the boost chip and the battery. The boost chip may be configured to boost an input voltage, and the boost chip may continuously and linearly adjust an output voltage. For details, refer to the descriptions of the boost chip in FIG. 1 and FIG. 6.

In an implementation, the battery of the electronic device 100 may input a voltage to the boost chip, the boost chip may boost the input voltage and output a voltage of the second voltage value, and the electronic device 100 may send the voltage output by the boost chip to the electronic device 200, to charge the electronic device 200.

S112: The electronic device 200 bucks the input voltage and outputs a voltage to the battery by using the charge pump chip, to charge the battery.

In an implementation, the electronic device 200 may receive the voltage of the second voltage value sent by the electronic device 100, and use the voltage as an input of the charge pump chip. The charge pump chip may perform M-times buck on the input voltage and output a voltage of the first voltage value. The voltage output by the charge pump chip may be sent to the battery, to charge the battery.

In some examples, when the electronic device 100 charges the electronic device 200, the electronic device 200 may display the user interface 1200 shown in FIG. 7B. The user interface 1200 may include related information of a current charging mode of "Super fast charging", for example, the icon 1211, the charging animation 1220, and the prompt information 1230.

In an implementation, the method further includes the following steps.

S113: After the battery level of the battery of the electronic device 200 is increased, the electronic device 200 sends third request information (including a fourth voltage value) to the electronic device 100.

In an implementation, as charging time is increased, the battery level of the battery of the electronic device 200 is increased. Assuming that the battery level is increased from the first battery level to a second battery level, the electronic device 200 may re-determine, based on the second battery level, a charging voltage (which may be referred to as a third voltage value and represented as *V*₃) required by the battery, where *V₃* > *V*₁*.* Then, the electronic device 200 may re-determine, based on the third voltage value and the fixed ratio corresponding to the charge pump chip, a voltage (which may be referred to as the fourth voltage value and represented as *V*₄) that needs to be input to the charge pump chip, where *V*₄ *= MV*₃, and *V*₄ *> V*₂*.* The third request information may include the fourth voltage value *V*₄.

S114: The electronic device 100 boosts a voltage input by the battery and outputs a voltage of the fourth voltage value to the electronic device 200 by using the boost chip.

Descriptions of S114 and S111 are similar. Details are not described again.

S115: The electronic device 200 bucks the input voltage and outputs a voltage to the battery by using the charge pump chip, to charge the battery.

In an implementation, the electronic device 200 may receive the voltage of the fourth voltage value sent by the electronic device 100, and use the voltage as an input of the charge pump chip. The charge pump chip may perform M-times buck on the input voltage and output a voltage of the third voltage value. The voltage output by the charge pump chip may be sent to the battery, to charge the battery.

It may be understood that, as a charging process proceeds, the battery level of the battery of the electronic device 200 is gradually increased and continuously changed. Correspondingly, the electronic device 200 dynamically requests a voltage of a corresponding voltage value from the electronic device 100. The boost chip of the electronic device 100 outputs a voltage of the voltage value dynamically requested by the electronic device 200. In other words, the output voltage is also continuously changed. The charge pump chip of the electronic device 200 may output a corresponding voltage to the battery based on the dynamically-changed input voltage, to dynamically provide a voltage of an actually-required voltage value to the battery. Each time the battery level of the battery of the electronic device 200 is changed, steps similar to S113 to S115 shown in FIG. 9B may be performed. Details are not described again.

In an implementation, the electronic device 200 may request a higher charging power (for example, request a higher charging current) from the electronic device 100. For example, a corresponding request indication is carried in the request information shown in S110 or S113, or additional request information is sent independently of S110/S113. It is assumed that the electronic device 100 originally provides a charging current of a current value 1. After receiving a request (used to request a charging current of a current value 2, where the current value 2 is greater than the current value 1) of the electronic device 200, the electronic device 100 may output a charging current of the current value 2, namely, a higher charging current, by using the boost chip. An output voltage is still of a voltage value requested by the electronic device 200. This may be understood as that the charging device can provide a higher output current when the output voltage remains unchanged, to increase a charging power, so as to increase a charging speed of the electronic device 200. This is not limited to the foregoing implementation. In another implementation, the electronic device 200 may alternatively request a lower charging power from the electronic device 100. Specific descriptions are similar to the foregoing descriptions. In other words, the electronic device 200 may request a required charging power based on a status of the electronic device 200. For example, when a battery level of the electronic device 200 is low, a higher charging power may be requested; or when a battery level is high, a lower charging power may be requested. This is not limited in this application.

This is not limited to the implementation shown in FIG. 9A and FIG. 9B. In another implementation, S103 may be replaced with another action of simulating a charger. This is not limited in this application. This is not limited to the implementation shown in FIG. 9A and FIG. 9B. In another implementation, S104 to S106 may be replaced with other actions used to determine whether the electronic device 100 supports the first fast charging protocol. This is not limited in this application.

In the method shown in FIG. 9A and FIG. 9B, the electronic device 100 and the electronic device 200 may dynamically negotiate a charging power/voltage/current according to a fast charging protocol. The electronic device 100 may output, to the electronic device 200 by using the boost chip, a voltage that is continuously changed and matches a negotiation result. The electronic device 200 may buck the input voltage and output a charging voltage actually required by the battery to the battery by using the charge pump chip. The boost chip and the charge pump chip are used, so that a high charging voltage can be provided to the battery of the electronic device 200, to increase a charging power. For example, a charging power of 22.5 W or higher may be implemented. In addition, a voltage and a current in an entire charging process may be dynamically adjusted, so that a required voltage can be provided to the battery of the electronic device 200 in real time, and a higher charging current can be provided when the voltage remains unchanged. In this way, the entire charging process can be performed normally and efficiently, and the charging process is better implemented.

In the foregoing embodiments, the following example is used for description: After receiving request information (used to request a voltage of a specific value and/or a current of a specific value) of the electronic device 200, the electronic device 100 provides a charging voltage of the specific value and/or a charging current of the specific value to the electronic device 200 based on the request information. In some other embodiments, the electronic device 100 provides a charging voltage and/or a charging current based on a status of the electronic device 100. For example, it is assumed that the electronic device 200 requests a charging current of a larger value, but the electronic device 100 has high power consumption, a high temperature, a low battery level, or the like. In this case, to ensure a running status of the electronic device 100, the electronic device 100 may not adjust a magnitude of a charging current, that is, does not provide a charging current of the larger value. This is not limited in this application.

All or some of the methods provided in embodiments of this application may be implemented by using software, hardware, firmware, or any combination thereof. When software is used to implement methods, all or some of the methods may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state disk (solid-state disk, SSD)), or the like. The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A charging system, comprising a first device and a second device, wherein the first device comprises a boost chip and a first battery, and the second device comprises a charge pump chip and a second battery;
the first battery is configured to output a first voltage to the boost chip;
the boost chip is configured to: receive the first voltage input by the first battery and output a second voltage to the second device, wherein the second voltage is greater than the first voltage;
the charge pump chip is configured to: receive the second voltage input by the first device and output a third voltage to the second battery, wherein the second voltage is M times the third voltage, and M is a positive number greater than 1; and
the second battery is configured to: receive the third voltage input by the charge pump chip and perform charging.

2. The system according to claim 1, wherein the first device comprises a first charging management chip, and the second device comprises a second charging management chip;
the second charging management chip is configured to send first request information to the first charging management chip according to a fast charging protocol, wherein the first request information is used to request a voltage of a first voltage value;
the first charging management chip is configured to send first indication information to the boost chip, wherein the first indication information indicates the boost chip to output a voltage of the first voltage value; and
the boost chip is further configured to: receive the first voltage and output the second voltage of the first voltage value to the second device based on the first indication information.

3. The system according to claim 2, wherein the first voltage value is determined by the charge pump chip based on a second voltage value and a ratio M corresponding to the charge pump chip, the second voltage value is a charging voltage value that is required by the second battery and that is obtained by the charge pump chip, and the first voltage value is M times the second voltage value.

4. The system according to claim 3, wherein the second voltage value is an obtained charging voltage value required by the second battery of a first battery level;
the second charging management chip is further configured to: after the second battery receives the third voltage input by the charge pump chip and performs charging, send second request information to the first charging management chip according to the fast charging protocol, wherein the second request information is used to request a voltage of a third voltage value, the third voltage value is determined by the charge pump chip based on a fourth voltage value and the ratio M corresponding to the charge pump chip, the fourth voltage value is a charging voltage value that is required by the second battery of a second battery level and that is obtained by the charge pump chip, and the third voltage value is M times the fourth voltage value;
the first charging management chip is further configured to send second indication information to the boost chip, wherein the second indication information indicates the boost chip to output a voltage of the third voltage value;
the boost chip is further configured to: receive the first voltage input by the first battery and output a fourth voltage of the third voltage value to the second device based on the second indication information;
the charge pump chip is further configured to: receive the fourth voltage input by the first device and output a fifth voltage to the second battery, wherein the fourth voltage is M times the fifth voltage; and
the second battery is further configured to: receive the fifth voltage input by the charge pump chip and perform charging.

5. The system according to claim 4, wherein the second battery level is greater than the first battery level, the fourth voltage value is greater than the second voltage value, and the third voltage value is greater than the first voltage value.

6. The system according to any one of claims 2 to 5, wherein the fast charging protocol is a smart charging protocol SCP, a universal fast charging specification UFCS, or a quick charge QC protocol.

7. The system according to any one of claims 1 to 6, wherein the first device comprises the first charging management chip, and the second device comprises the second charging management chip; and
the first charging management chip is configured to: perform a handshake according to a power delivery PD protocol with the second charging management chip, and identify that the first device is a charging device and the second device is a to-be-charged device.

8. The system according to claim 7, wherein the first charging management chip is further configured to: when the first device receives a first user operation, identify that the first device is a charging device and the second device is a to-be-charged device, wherein the first user operation is used to set a connection mode of the first device and the second device to a reverse charging mode.

9. The system according to any one of claims 1 to 8, wherein the first device comprises the first charging management chip, and the second device comprises the second charging management chip;
the boost chip is further configured to output the second voltage and a first current to the second device;
the second charging management chip is configured to send third request information to the first charging management chip according to the fast charging protocol, wherein the third request information is used to request a current of a first current value, and the first current value is different from a numerical value of the first current;
the first charging management chip is configured to send third indication information to the boost chip, wherein the third indication information indicates the boost chip to output a current of the first current value; and
the boost chip is further configured to: receive the voltage input by the first battery and output the second voltage and a second current of the first current value to the second device based on the third indication information.

10. The system according to any one of claims 1 to 9, wherein the second device comprises a display, and the display is configured to display a first interface, wherein the first interface comprises fourth indication information, and the fourth indication information indicates that a charging mode is a super fast charging mode.

11. A charging method, applied to a charging system, wherein the charging system comprises a first device and a second device, and the method comprises:
outputting, by a first battery of the first device, a first voltage to a boost chip of the first device;
receiving, by the boost chip, the first voltage input by the first battery and outputting a second voltage to the second device, wherein the second voltage is greater than the first voltage;
receiving, by the charge pump chip of the second device, the second voltage input by the first device and outputting a third voltage to a second battery of the second device, wherein the second voltage is M times the third voltage, and M is a positive number greater than 1; and
receiving, by the second battery, the third voltage input by the charge pump chip and performing charging.

12. The method according to claim 11, wherein the method further comprises:
receiving, by a first charging management chip of the first device, first request information sent by a second charging management chip of the second device according to a fast charging protocol, wherein the first request information is used to request a voltage of a first voltage value; and
sending, by the first charging management chip, first indication information to the boost chip, wherein the first indication information indicates the boost chip to output a voltage of the first voltage value; and
receiving, by the boost chip, the first voltage input by the first battery and outputting the second voltage to the second device comprises:
receiving, by the boost chip, the first voltage and outputting the second voltage of the first voltage value to the second device based on the first indication information.

13. The method according to claim 12, wherein the first voltage value is determined by the charge pump chip based on a second voltage value and a ratio M corresponding to the charge pump chip, the second voltage value is a charging voltage value that is required by the second battery and that is obtained by the charge pump chip, and the first voltage value is M times the second voltage value.

14. The method according to claim 13, wherein the second voltage value is an obtained charging voltage value required by the second battery of a first battery level; and
after receiving, by the second battery, the third voltage input by the charge pump chip and performing charging, the method further comprises:
receiving, by the first charging management chip, second request information sent by the second charging management chip according to the fast charging protocol, wherein the second request information is used to request a voltage of a third voltage value, the third voltage value is determined by the charge pump chip based on a fourth voltage value and the buck ratio M corresponding to the charge pump chip, the fourth voltage value is a charging voltage value that is required by the second battery of a second battery level and that is obtained by the charge pump chip, and the third voltage value is M times the fourth voltage value;
sending, by the first charging management chip, second indication information to the boost chip, wherein the second indication information indicates the boost chip to output a voltage of the third voltage value;
receiving, by the boost chip, the voltage input by the first battery and outputting a fourth voltage of the third voltage value to the second device based on the second indication information;
receiving, by the charge pump chip, the fourth voltage input by the first device and outputting a fifth voltage to the second battery, wherein the fourth voltage is M times the fifth voltage; and
receiving, by the second battery, the fifth voltage input by the charge pump chip and performing charging.

15. The method according to claim 14, wherein the second battery level is greater than the first battery level, the fourth voltage value is greater than the second voltage value, and the third voltage value is greater than the first voltage value.

16. The method according to any one of claims 12 to 15, wherein the fast charging protocol is a smart charging protocol SCP, a universal fast charging specification UFCS, or a quick charge QC protocol.

17. The method according to any one of claims 11 to 16, wherein the method further comprises:
performing, by the first charging management chip of the first device and the second charging management chip of the second device, a handshake according to a power delivery PD protocol, and identifying that the first device is a charging device and the second device is a to-be-charged device.

18. The method according to claim 17, wherein performing, by the first charging management chip of the first device and the second charging management chip of the second device, the handshake according to the power delivery PD protocol, and identifying that the first device is a charging device and the second device is a to-be-charged device comprises:
receiving, by the first device, a first user operation, wherein the first user operation is used to set a connection mode of the first device and the second device to a reverse charging mode; and
performing, by the first charging management chip and the second charging management chip, the handshake according to the PD protocol, and identifying that the first device is a charging device and the second device is a to-be-charged device.

19. The method according to any one of claims 11 to 18, wherein receiving, by the boost chip, the first voltage input by the first battery and outputting the second voltage to the second device comprises:
receiving, by the boost chip, the first voltage and outputting the second voltage and a first current to the second device; and
after receiving, by the second battery, the third voltage input by the charge pump chip and performing charging, the method further comprises:
receiving, by the first charging management chip of the first device, third request information sent by the second charging management chip of the second device according to the fast charging protocol, wherein the third request information is used to request a current of a first current value, and the first current value is different from a numerical value of the first current;
sending, by the first charging management chip, third indication information to the boost chip, wherein the third indication information indicates the boost chip to output a current of the first current value; and
receiving, by the boost chip, the voltage input by the first battery and outputting the second voltage and a second current of the first current value to the second device based on the third indication information.

20. The method according to any one of claims 11 to 19, wherein the method further comprises:
displaying, by the second device, a first interface, wherein the first interface comprises fourth indication information, and the fourth indication information indicates that a charging mode is a super fast charging mode.

21. A first device, comprising a boost chip, a first battery, and a first charging management chip;
the first charging management chip is configured to receive, according to a fast charging protocol, first request information sent by a second device, wherein the first request information is used to request a voltage of a first voltage value, the first voltage value is determined by the second device based on a second voltage value and a ratio M corresponding to a charge pump chip of the second device, and the second voltage value is a charging voltage value that is required by a second battery of the second device and that is obtained by the second device;
the first charging management chip is configured to send first indication information to the boost chip, wherein the first indication information indicates the boost chip to output a voltage of the first voltage value;
the first battery is configured to output a first voltage to the boost chip; and
the boost chip is configured to: receive the first voltage input by the first battery and output a second voltage of the first voltage value to the second device based on the first indication information, wherein the second voltage is received by the charge pump chip and is used by the charge pump chip to output a third voltage, the third voltage is used to charge the second battery, the second voltage is M times the third voltage, and M is a positive number greater than 1.

22. The first device according to claim 21, wherein the first voltage value is M times the second voltage value.

23. The first device according to claim 21 or 22, wherein the second voltage value is an obtained charging voltage value required by the second battery of a first battery level;
the first charging management chip is further configured to: after the boost chip receives the first voltage input by the first battery and outputs the second voltage of the first voltage value to the second device, receive, according to the fast charging protocol, second request information sent by the second device, wherein the second request information is used to request a voltage of a third voltage value, the third voltage value is determined by the second device based on a fourth voltage value and the ratio M corresponding to the charge pump chip, the fourth voltage value is an obtained charging voltage value required by the second battery of a second battery level, and the third voltage value is M times the fourth voltage value;
the first charging management chip is further configured to send second indication information to the boost chip, wherein the second indication information indicates the boost chip to output a voltage of the third voltage value; and
the boost chip is further configured to: receive the first voltage input by the first battery and output a fourth voltage of the third voltage value to the second device based on the second indication information, wherein the fourth voltage is received by the charge pump chip and is used by the charge pump chip to output a fifth voltage, the fifth voltage is used to charge the second battery, and the fourth voltage is M times the fifth voltage.

24. The first device according to claim 23, wherein the second battery level is greater than the first battery level, the fourth voltage value is greater than the second voltage value, and the third voltage value is greater than the first voltage value.

25. The first device according to any one of claims 21 to 24, wherein the fast charging protocol is a smart charging protocol SCP, a universal fast charging specification UFCS, or a quick charge QC protocol.

26. The first device according to any one of claims 21 to 25, wherein the first charging management chip is further configured to: perform a handshake according to a power delivery PD protocol with the second device, and identify that the first device is a charging device and the second device is a to-be-charged device.

27. The first device according to any one of claims 21 to 26, wherein
the boost chip is further configured to: receive the first voltage input by the first battery and output the second voltage and a first current to the second device based on the first indication information;
the first charging management chip is further configured to receive, according to the fast charging protocol, third request information sent by the second device, wherein the third request information is used to request a current of a first current value, and the first current value is different from a numerical value of the first current;
the first charging management chip is further configured to send third indication information to the boost chip, wherein the third indication information indicates the boost chip to output a current of the first current value; and
the boost chip is further configured to: receive the voltage input by the first battery and output the second voltage and a second current of the first current value to the second device based on the third indication information.

28. A second device, comprising a charge pump chip, a first battery, and a first charging management chip;
the first charging management chip is configured to send first request information to a first device according to a fast charging protocol, wherein the first request information is used to request a voltage of a first voltage value, the first voltage value is determined by the charge pump chip based on a second voltage value and a ratio M corresponding to the charge pump chip, and the second voltage value is a charging voltage value that is required by the first battery and that is obtained by the charge pump chip;
the charge pump chip is configured to: receive a first voltage that is input by the first device based on the first request information, and output a second voltage to the first battery, wherein the first voltage is M times the second voltage, M is a positive integer greater than 1, and a value of the first voltage is the first voltage value; and
the first battery is configured to: receive the second voltage input by the charge pump chip and perform charging.

29. The second device according to claim 28, wherein the first voltage value is M times the second voltage value, the first voltage is output by a boost chip of the first device after the boost chip receives a third voltage input by a second battery of the first device, and the first voltage is greater than the third voltage.

30. The second device according to claim 28 or 29, wherein the second voltage value is an obtained charging voltage value required by the second battery of a first battery level;
the first charging management chip is further configured to: after the first battery receives the second voltage input by the charge pump chip and performs charging, send second request information to the first device according to the fast charging protocol, wherein the second request information is used to request a voltage of a third voltage value, the third voltage value is determined by the charge pump chip based on a fourth voltage value and the ratio M corresponding to the charge pump chip, the fourth voltage value is a charging voltage value that is required by the second battery of a second battery level and that is obtained by the charge pump chip, and the third voltage value is M times the fourth voltage value;
the charge pump chip is further configured to: receive a fourth voltage that is input by the first device based on the second request information, and output a fifth voltage to the first battery, wherein the fourth voltage is M times the fifth voltage, and a value of the fourth voltage is the third voltage value; and
the first battery is further configured to: receive the fifth voltage input by the charge pump chip and perform charging.

31. The second device according to claim 30, wherein the second battery level is greater than the first battery level, the fourth voltage value is greater than the second voltage value, and the third voltage value is greater than the first voltage value.

32. The second device according to any one of claims 28 to 31, wherein the fast charging protocol is a smart charging protocol SCP, a universal fast charging specification UFCS, or a quick charge QC protocol.

33. The second device according to any one of claims 28 to 32, wherein the first charging management chip is further configured to: perform a handshake according to a power delivery PD protocol with the first device, and identify that the first device is a charging device and the second device is a to-be-charged device.

34. The second device according to any one of claims 28 to 33, wherein
the charge pump chip is further configured to: receive the first voltage and a first current that are input by the first device based on the first request information, and output the second voltage and a second current to the first battery, wherein the second current is related to the first current;
the first battery is further configured to: receive the second voltage and the second current that are input by the charge pump chip and perform charging;
the first charging management chip is further configured to send third request information to the first device according to the fast charging protocol, wherein the third request information is used to request a current of a first current value, and the first current value is different from a numerical value of the first current;
the charge pump chip is further configured to: receive the first voltage and a third current that are input by the first device based on the third request information, and output the second voltage and a fourth current to the first battery, wherein a numerical value of the third current is the first current value, and the fourth current is related to the third current; and
the first battery is further configured to: receive the second voltage and the fourth current that are input by the charge pump chip and perform charging.

35. The second device according to any one of claims 28 to 34, wherein the second device comprises a display, and the display is configured to display a first interface, wherein the first interface comprises indication information, and the indication information indicates that a charging mode is a super fast charging mode.

36. A computer storage medium, wherein the computer storage medium stores a computer program, and when the computer program is executed by a processor, the method according to any one of claims 11 to 20 is implemented.
